# EUROPEAN PATENT SPECIFICATION

(11) **EP 3 385 244 B1**
(45) Date of publication and mention of the grant of the patent: **18.01.2023**
(21) Application number: 17000606.8
(22) Date of filing: 07.04.2017
(51) Int. Cl.: C04B 35/01, C04B 35/515, C04B 35/634, C04B 35/638, C04B 38/00, C04B 38/06

(54) **PROCESS FOR PRODUCING POROUS SINTERED BODIES BASED ON PASTE-LIKE CAPILLARY SUSPENSIONS**
VERFAHREN ZUR HERSTELLUNG PORÖSER SINTERKÖRPER BASIEREND AUF PASTÖSEN KAPILLARSUSPENSIONEN
PROCÉDÉ DE FABRICATION DE CORPS FRITTÉ POREUX À BASE DE SUSPENSIONS CAPILLAIRES SOUS FORME DE PÂTE

(43) Date of publication of application: 10.10.2018
(73) Proprietor: Karlsruher Institut für Technologie, 76131 Karlsruhe (DE)
(72) Inventor: MAURATH, Johannes, 76275 Ettlingen (DE); MUTH, Joseph, Somerville, MA 02143 (US); WILLENBACHER, Norbert, 67292 Kirchheimbolanden (DE); LEWIS, Jennifer, Cambridge, MA 02138 (US)
(74) Representative: Müller-Boré & Partner Patentanwälte PartG mbB

(56) References cited:
- EP-B1- 2 875 858
- DE-B3-102011 106 834

## Description

The present invention relates to a process for producing a porous sintered body based on a paste-like capillary suspension. In another aspect, the present invention relates to a paste-like capillary suspension for manufacturing such porous sintered body. The phenomenon of capillary suspensions is well known in the art and is, for example, described by Koos et al. in Science 2011, 331, 897-900. In brief, capillary suspensions represent ternary fluid/fluid/solid systems with a strong particle network structure controlled by capillary forces. When a small amount of an immiscible secondary liquid is added to the bulk phase of a primary liquid having ceramic or glassy particles dispersed therein, the texture and the flow characteristics of the suspension are dramatically altered, being a consequence of the formation of the strong particle network structure within the suspension, wherein the particles stick together due to capillary forces induced by liquid bridges formed by the secondary liquid. This phenomenon not only alters the rheology of the system from fluid-like to paste-like, it also stabilizes the suspension. Settling is prevented since the particles are trapped in the network.

By varying the amount of the secondary liquid, the viscosity as well as the yield stress of the capillary suspension can be tuned. Capillary suspensions can be created regardless of whether the secondary liquid wets the particles of the suspension more effective (referred to as "pendular state", *θ* < 90°) or less effective (referred to as "capillary state", *θ* > 90°) than the primary liquid, where the contact angle *θ* is the angle made by the secondary liquid against the particles when surrounded by the primary liquid.

Due to their unique rheological properties, in particular due to their paste-like nature and shear thinning behavior, capillary suspensions are suitable precursors for manufacturing sintered materials which are highly porous, as described in EP 2 729 431 B1 , DE 10 2011 106834 B3 and in EP 2 875 858 B1, for example. Typically, in such manufacturing processes, the capillary suspensions are molded into the desired geometrical shape, followed by an appropriate post-treatment, such as drying, debinding and sintering.

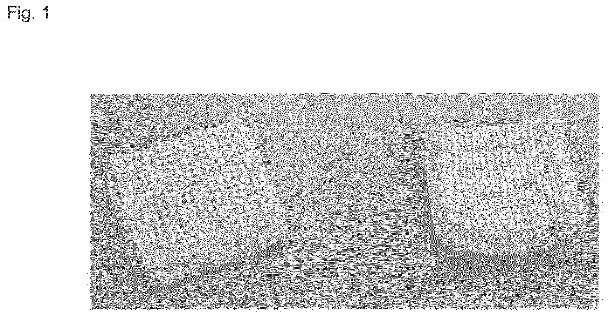

Up to now, porous sintered materials obtained on the basis of paste-like capillary suspensions may have the drawback that during the respective post-treatment steps, crack formation due to exhausting gases from combustion as well as deformation due to non-uniform shrinking may occur, in particular in the case of fine and/or complex geometrical shapes, such as illustrated in Fig. 1, resulting not only in a deteriorated appearance of the such obtained porous sintered materials but also rendering the production of porous sintered materials with a fine and/or complex geometrical shape almost impossible.

Accordingly, the object underlying the present invention is to overcome the above-mentioned disadvantages associated with the production of porous sintered materials based on paste-like capillary suspensions known in the art. In particular, the technical problem underlying the present invention is to provide a process for producing porous sintered bodies based on paste-like capillary suspensions, which should allow to obtain the porous sintered bodies without the occurrence of crack formation and deformation, thereby maintaining the desired, even fine and/or complex geometrical shape.

Therefore, in a first aspect, the present invention relates to a process for producing a porous sintered body based on a paste-like capillary suspension, wherein the process comprises the steps of:
(a) providing a paste-like capillary suspension by mixing of 5 to 40 vol% of a particulate solid phase, 50 to 94.9 vol% of a liquid primary phase, and 0.1 to 10 vol% of a liquid secondary phase, in each case related to the total volume of the resulting suspension,
   wherein the particulate solid phase comprises at least one solid component having an average particle diameter in the range of 0.05 to 50 µm,
   wherein the liquid primary phase comprises two non-polar liquid components which have a low and a high vapor pressure at ambient temperature, respectively, and a first binder component dissolved therein,
   wherein the liquid secondary phase comprises a polar liquid component and a second binder component dissolved therein,
   wherein the non-polar liquid component having a low vapor pressure of the liquid primary phase is selected from the group consisting of mineral oils,
   wherein the non-polar liquid component having a high vapor pressure of the liquid primary phase is selected from the group consisting of mineral spirits,
   wherein a low vapor pressure means a value of less than 10 hPa at ambient temperature, whereas a high vapor pressure means a value of equal to or more than 10 hPa at ambient temperature,
   wherein in the liquid primary phase, the volume fraction of the non-polar liquid component having a low vapor pressure is in the range of 40 to 60 vol%, the volume fraction of the non-polar liquid component having a high vapor pressure is in the range of 39.5 to 59.5 vol%, and the volume fraction of the first binder component dissolved therein is in the range of 0.5 to 10 vol%, in each case related to the total volume of the resulting phase, and
   wherein in the liquid secondary phase, the volume fraction of the polar liquid component is in the range of 20 to 80 vol%, and the volume fraction of the second binder component dissolved therein is in the range of 20 to 80 vol%, in each case related to the total volume of the resulting phase;
(b) molding the paste-like capillary suspension into the desired geometrical shape, thereby forming a green body;
(c) drying the green body, thereby at least partially removing the liquid components;
(d) thermally debinding the green body, thereby removing the binder components; and
(e) sintering the green body, thereby obtaining the porous sintered body.

Due to the specific process steps (a) to (e) as defined above, the occurrence of crack formation and deformation in the porous sintered body obtained by the process according to the present invention can be avoided. Thus, it is possible to produce a porous sintered body even with a fine and/or complex geometrical shape, wherein the geometrical shape is not adversely affected during the post-treatment of the green body.

As will be described hereinafter, the process steps (a) to (e) of the process for producing a porous sintered body are as follows:
In step (a) of the above-defined process, a paste-like capillary suspension is provided, which is obtained by mixing of 5 to 40 vol% of a particulate solid phase, 50 to 94.9 vol% of a liquid primary phase, and 0.1 to 10 vol% of a liquid secondary phase. In a preferred embodiment, the liquid primary phase amounts to 50 to 94.5 vol%, and the liquid secondary phase amounts to 0.5 to 10 vol%. Herein, the volume fractions of the respective phases, expressed in vol%, refer in each case to the total volume of the resulting suspension, wherein the total volume is calculated by addition of the respective volumes of the particulate solid phase, the liquid primary phase and the liquid secondary phase. The above ranges of the volume fractions ensure that the capillary suspension is paste-like, and thus, can be molded into a green body having a desired geometrical shape.

Next, the three phases of the paste-like capillary suspension provided in step (a), i.e. the particulate solid phase, the liquid primary phase and the liquid secondary phase, are explained in more detail.

According to the present invention, the particulate solid phase comprises at least one solid component having an average particle diameter in the range of 0.05 to 50 µm, preferably in the range of 0.05 to 10 µm. Herein, the average particle diameter of the at least one solid component is to be construed as the d₅₀ value thereof, which can be measured using static light scattering.

Apart from its average particle diameter, the at least one solid component of the particulate solid phase is not particularly limited. In a preferred embodiment, the at least one solid component of the particulate solid phase is selected from the group consisting of oxides, carbides, nitrides, phosphates and glasses, i.e. the particles of the particulate solid phase may be ceramic or glassy. Examples thereof include oxides such as Al₂O₃, ZrO₂, CeO₂, TiO₂, MgO, ZnO, Fe₂O₃, Fe₃O₄, SiO₂, aluminum titanate and barium titanate, carbides such as SiC, BC, HfC, TaC and WC, nitrides such as SiN, AIN and TiN, phosphates such as tricalcium phosphate and hydroxyapatite, and glasses such as borosilicate glass, quartz glass and soda lime glass.

According to the present invention, the particulate solid phase may comprise two or more solid components having a different average particle diameter, respectively, i.e. the particulate solid phase may be bimodal, trimodal, etc.

The liquid primary phase which may also be denoted as the bulk phase or as the continuous phase comprises two non-polar liquid components which have a low and a high vapor pressure at ambient temperature, respectively, and a first binder component dissolved therein.

In the course of the present invention, a non-polar liquid will be understood to be such that it has a dielectric constant ε of less than 15, preferably of less than 5, as measured at ambient temperature which is defined as being 25 °C. In line with this, a liquid having a dielectric constant ε of equal to or more than 15 is to be regarded as polar. Furthermore, a low vapor pressure means a value of less than 10 hPa at ambient temperature, whereas a high vapor pressure means a value of equal to or more than 10 hPa. As far as the polarity as well as the vapor pressure of the respective liquid component are concerned, the skilled person finds such values for commonly used solvents in textbooks, e.g. in the CRC Handbook of Chemistry and Physics, or in databases, e.g. in the webbook of the National Institute of Standards and Technology.

In the liquid primary phase, the non-polar liquid component having a low vapor pressure is selected from the group consisting of mineral oils, e.g. paraffins. Further, in the liquid primary phase, the non-polar liquid component having a high vapor pressure is selected from the group consisting of mineral spirits, e.g. aromatic hydrocarbons, alicyclic hydrocarbons and/or aliphatic hydrocarbons. In line with the above definition of a high vapor pressure, the molecular mass of said hydrocarbons is such that their vapor pressure is equal to or more than 10 hPa.

Besides the two non-polar liquid components, the liquid primary phase comprises a first binder component dissolved therein. In a preferred embodiment of the above-defined process, the first binder component is selected from the group consisting of carnauba wax, paraffin wax, polypropylene wax, montan wax and bees wax.

According to the present invention, the volume fractions of the two non-polar liquid components and the first binder component in the liquid primary phase are such that the volume fraction of the non-polar liquid component having a low vapor pressure is in the range of 40 to 60 vol%, the volume fraction of the non-polar liquid component having a high vapor pressure is in the range of 39.5 to 59.5 vol%, and the volume fraction of the first binder component dissolved therein is in the range of 0.5 to 10 vol%. Herein, the volume fractions of the two non-polar liquid components and the first binder component, expressed in vol%, refer in each case to the total volume of the resulting phase, wherein the total volume is calculated by addition of the respective volumes of the non-polar liquid component having a low vapor pressure, the non-polar liquid component having a high vapor pressure and the first binder component.

The liquid secondary phase comprises a polar liquid component and a second binder component dissolved therein, with the definition of polarity as provided above also being applicable here.

Preferably, the polar liquid component of the liquid secondary phase is selected from the group consisting of water, alcohols, e.g. mono- and oligohydric alcohols such as ethanol, isopropanol, ethylene glycol and glycerol, acetone and N-methyl-2-pyrrolidone.

Apart from the polar liquid component, the liquid secondary phase comprises a second binder component dissolved therein. In a preferred embodiment of the above-defined process, the second binder component of the liquid secondary phase is selected from the group consisting of saccharides, e.g. mono- and oligosaccharides such as glucose, fructose and sucrose, polysaccharides such as starch, cellulose and derivatives thereof, polyethylene glycol, polyacrylate, polyvinyl alcohol, polyvinyl acetate and polyvinyl formamide.

Similar to the liquid primary phase, the volume fractions of the polar liquid component and the second binder component in the liquid secondary phase are such that the volume fraction of the polar liquid component is in the range of 20 to 80 vol%, preferably in the range of 40 to 60 vol%, and the volume fraction of the second binder component dissolved therein is in the range of 20 to 80 vol%, preferably in the range of 40 to 60 vol%. Herein, the volume fractions of the polar liquid component and the second binder component, expressed in vol%, refer in each case to the total volume of the resulting phase, wherein the total volume is calculated by addition of the respective volumes of the polar liquid component and the second binder component.

In view of the above, it is clear to a person skilled in the art that the liquid primary phase, also referred to as the non-polar phase, and the liquid secondary phase, also referred to as the polar phase, are substantially immiscible with each other. In this respect, the term "substantially immiscible" is to be construed in a qualitative manner, meaning that the liquid primary phase and the liquid secondary phase do not mix in all proportions, i.e. the two liquid phases do not entirely dissolve in each other at any concentration so as to form a homogeneous solution. Accordingly, a slightly miscible system, such as water and 1-octanol, mentioned herein as a reference, is also to be considered as substantially immiscible in the sense of the present invention.

In the process for producing a porous sintered body as defined above, the provision of the paste-like capillary suspension in step (a) is not limited to a particular mixing procedure. Due to practical reasons, it is, however, preferred to first disperse the particulate solid phase in the liquid primary phase, and then to add the liquid secondary phase to the obtained suspension of the particulate solid phase dispersed in the liquid primary phase.

In step (b) of the process for producing a porous sintered body according to the present invention, the paste-like capillary suspension provided in step (a) is molded into the desired geometrical shape. Thereby, a green body is formed.

According to the present invention, the molding of the paste-like capillary suspension is not limited to a specific procedure. The skilled person routinely selects that molding procedure which is deemed to be most suited for the respective application purpose, *inter alia* depending on the geometrical shape which the porous sintered body shall finally have. For example, the green body can be obtained by extrusion molding, injection molding or three-dimensional printing methods.

Examples of such three-dimensional printing methods, also generally known as additive manufacturing methods or rapid prototyping methods, include direct ink writing (DIW), also referred to as robocasting, wherein a filament of the paste-like capillary suspension as an "ink filament" is extruded from a nozzle, thereby forming the green body layer by layer. Typically, direct ink writing is particularly suitable for molding of green bodies having a fine and/or complex geometrical shape, such as cellular or framework structures, e.g. log-piles and honeycombs.

In case the molding is performed in step (b) using three-dimensional printing, in particular direct ink writing, it is preferable to print the paste-like capillary suspension on a surface coated with a layer of polyethylene glycol (PEG), thereby forming the green body on said PEG layer. For example, molding takes place on a glass slide coated with a thin layer of PEG 1500 or any other PEG which is solid at ambient temperature, but which readily melts at higher temperatures during the subsequent drying procedure in step (c). In this embodiment, before the green body is dried in step (c), the layer of polyethylene glycol, in particular in direct vicinity of the green body, is wetted with water. Due to the wetting of the polyethylene glycol, the green body is then dried on a slippery layer which allows for a uniform shrinking, in particular in the horizontal plane, without the occurrence of cracks and deformation. Accordingly, the green body is prevented from being adhered to the surface on which the paste-like capillary suspension has been printed, and thus, the green body can slide thereon in a frictionless manner when being dried.

Generally, in the course of the drying in step (c), the liquid components of the paste-like capillary suspension are at least partially removed from the green body. In particular, the drying procedure leads to a fast removal of the non-polar liquid component having a high vapor pressure, thereby accelerating the drying without leading to a collapse of the particle network structure in the green body formed from the paste-like capillary suspension.

In a preferable embodiment, drying is performed at a drying temperature in the range of 50 to 120 °C for 5 to 60 minutes, e.g. in a conventional laboratory oven. Depending on the composition of the paste-like capillary suspension provided in step (a), the skilled person routinely selects appropriate conditions for the drying procedure, such as the drying temperature and the drying duration.

In case the drying is performed slightly above or below the melting point of the first binder component of the liquid primary phase, said first binder component, e.g. a wax, preferably having a melting point in the range of 50 to 130 °C, can crystallize when lowering the temperature at the end of the drying procedure, thereby stabilizing the green body. In particular, in case the drying procedure takes place on the layer of polyethylene glycol, the first binder component can crystallize in a state where the PEG layer is still wetted, i.e. slippery. In the same way, the second binder component of the liquid secondary phase also helps to increase the stability of the green body during the drying procedure, thereby avoiding the occurrence of crack formation and deformation.

After accomplishing the drying by cooling down to ambient temperature, the green body may be placed onto a porous ceramic sintering plate. When present, the layer of polyethylene glycol prevents the green body from being damaged during the displacement.

In step (d) of the process for producing a porous sintered body, the green body, after having been dried in step (c), is thermally debinded. Thereby, the removal of liquid components which are still present in the green body takes place. In addition, all organic binder components of the liquid primary phase as well as the liquid secondary phase are removed.

Thermal debinding may be performed at a debinding temperature in the range of 200 to 900 °C for at least 2 hours in a high temperature furnace, without being limited to said debinding conditions though. Usually, the thermal debinding is performed no longer than about 24 hours. Again, the skilled person routinely selects the appropriate conditions for the thermal debinding procedure, such as the debinding temperature and the debinding duration, in view of the composition of the paste-like capillary suspension provided in step (a). Typically, the thermal debinding procedure is performed stepwise.

For example, the green body may be heated from ambient temperature to 200 °C, where the thermal debinding starts, at a heating rate in the range of 1.5 to 2.5 °C/min. The debinding temperature may then be held constant for at least one hour, before being raised to a final debinding temperature in the range of 500 to 900 °C at a heating rate of 0.5 to 1.5 °C/min. At said debinding temperature, the green body may be held constant for at least another hour. Finally, the furnace may be cooled to an intermediate debinding temperature in the range of 350 to 450 °C at a cooling rate in the range of 1 to 2 °C/min, held constant at said debinding temperature for 10 to 20 min, and then further cooled down to ambient temperature without temperature regulation.

In step (e) of the process for producing a porous sintered body as defined above, the green body, after having been thermally debinded in step (d), is sintered. After accomplishing the sintering, a porous sintered body is obtained which is not affected by cracks and deformation due to the specific composition of the paste-like capillary suspension provided in step (a).

The sintering conditions, such as the sintering temperature and the sintering duration, are not particularly limited according to the present invention. In particular, the skilled person will select the sintering conditions depending on the at least one solid component in the particulate solid phase of the paste-like capillary suspension provided in step (a). In this regard, it is clear that the higher the sintering temperature is for a given solid material, the smaller the porosity and the average pore size of the porous sintered body become as a result of shrinking.

For example, sintering may be performed in step (e) at a sintering temperature in the range of 900 to 2600 °C for at least 30 min in a high temperature furnace which can be the same as in the thermal debinding procedure of step (d). Usually, the sintering is performed no longer than about 24 hours. Preferably, sintering is performed at a sintering temperature in the range of 900 to 2400 °C depending on the particulate solid phase, wherein the furnace is heated up to the sintering temperature at a heating rate in the range of 2.5 to 3.5 °C/min, held constant at this sintering temperature for at least 30 min, and then cooled down to ambient temperature at a cooling rate in the range of 1.5 to 2.5 °C/min.

The porous sintered body obtained by the above-defined process is characterized in that the porosity thereof is in the range of 30 to 80%, preferably in the range of 50 to 70%, and the average pore size thereof is in the range of 0.5 to 50 µm, preferably in the range of 1 to 10 µm. Due to the particle network structure of the paste-like capillary suspension used for producing the porous sintered body, the latter has an almost fully open porosity. By varying the composition of the paste-like capillary suspension, the porosity as well as the average pore size thereof can be adjusted so as to be suitable for the respective application purpose. As already mentioned above, the porosity and the average pore size of the porous sintered body can also be controlled by the sintering temperature.

Herein, the average pore size of the porous sintered body is to be construed as the d₅₀ value thereof. The porosity and the average pore size are determined using mercury intrusion porosimetry (in accordance with DIN 66133), Archimedes density (in accordance with DIN EN 993-18), image analysis from scanning electron microscopic (SEM) images of cross sections and quantitative structural analysis (in accordance with DIN EN ISO 643).

Based on the specific composition of the paste-like capillary suspension, in particular that of the liquid primary phase, in combination with the specific post-treatment steps, the porous sintered body obtained by the above-defined process has a defect-free shape, i.e. the shape of the green body is not adversely affected during the post-treatment. Due to the absence of cracks, the porous sintered body exhibits an excellent mechanical strength. Advantageously, the present invention allows to reproducibly obtain a porous sintered body, such as a ceramic or a glassy body, even with a fine and/or complex geometrical shape.

In view of its advantageous structural and mechanical properties, the porous sintered body obtained by the above-defined process can be used in various applications. For example, it can be suitably used as a filtration medium, e.g. for water purification, as a catalyst support, as a structural element, e.g. for lightweight construction, etc.

In another aspect, the present invention relates to a paste-like capillary suspension, obtainable by:
mixing of 5 to 40 vol% of a particulate solid phase, 50 to 94.9 vol% of a liquid primary phase, and 0.1 to 10 vol% of a liquid secondary phase, in each case related to the total volume of the resulting suspension,
wherein the particulate solid phase comprises at least one solid component having an average particle diameter in the range of 0.05 to 50 µm,
wherein the liquid primary phase comprises two non-polar liquid components which have a low and a high vapor pressure at ambient temperature, respectively, and a first binder component dissolved therein,
wherein the liquid secondary phase comprises a polar liquid component and a second binder component dissolved therein,
wherein the non-polar liquid component having a low vapor pressure of the liquid primary phase is selected from the group consisting of mineral oils,
wherein the non-polar liquid component having a high vapor pressure of the liquid primary phase is selected from the group consisting of mineral spirits,
wherein a low vapor pressure means a value of less than 10 hPa at ambient temperature, whereas a high vapor pressure means a value of equal to or more than 10 hPa at ambient temperature,
wherein in the liquid primary phase, the volume fraction of the non-polar liquid component having a low vapor pressure is in the range of 40 to 60 vol%, the volume fraction of the non-polar liquid component having a high vapor pressure is in the range of 39.5 to 59.5 vol%, and the volume fraction of the first binder component dissolved therein is in the range of 0.5 to 10 vol%, in each case related to the total volume of the resulting phase, and
wherein in the liquid secondary phase, the volume fraction of the polar liquid component is in the range of 20 to 80 vol%, and the volume fraction of the second binder component dissolved therein is in the range of 20 to 80 vol%, in each case related to the total volume of the resulting phase.

The particulate solid phase, the liquid primary phase and the liquid secondary phase are as defined hereinabove. Moreover, preferred ratios of the particulate solid phase, the liquid primary phase and the liquid secondary phase are also as defined hereinabove.

### Figures:

Fig. 1 shows images of porous sintered bodies obtained by a process not falling within the scope of the present invention. The porous sintered bodies having the shape of a log-pile as shown in Fig. 1 exhibit strong deformations and cracks due to an inappropriate composition of the paste-like capillary suspension as well as due to an inappropriate post-treatment.

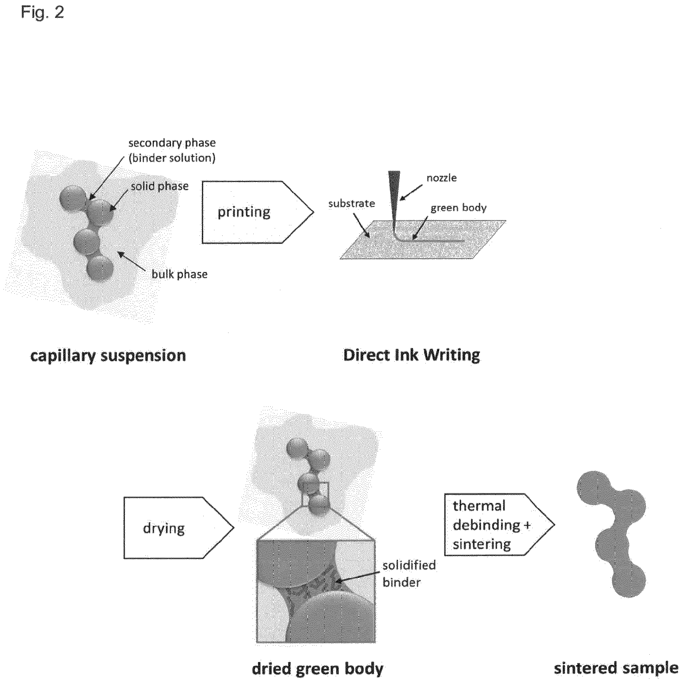

Fig. 2 shows a flow sheet of the processing route for direct ink writing of the paste-like capillary suspensions.

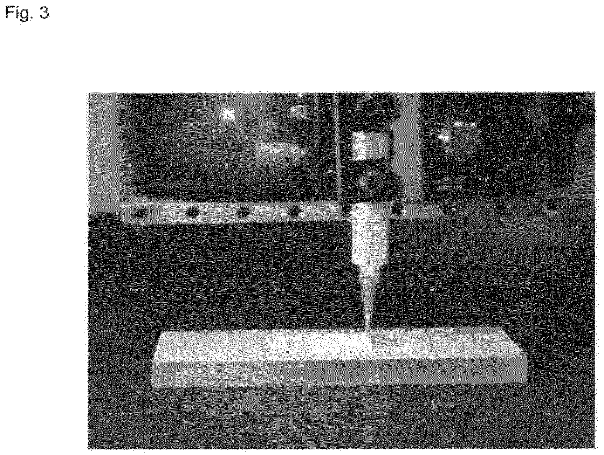

Fig. 3 shows an image of the apparatus used for direct ink writing.

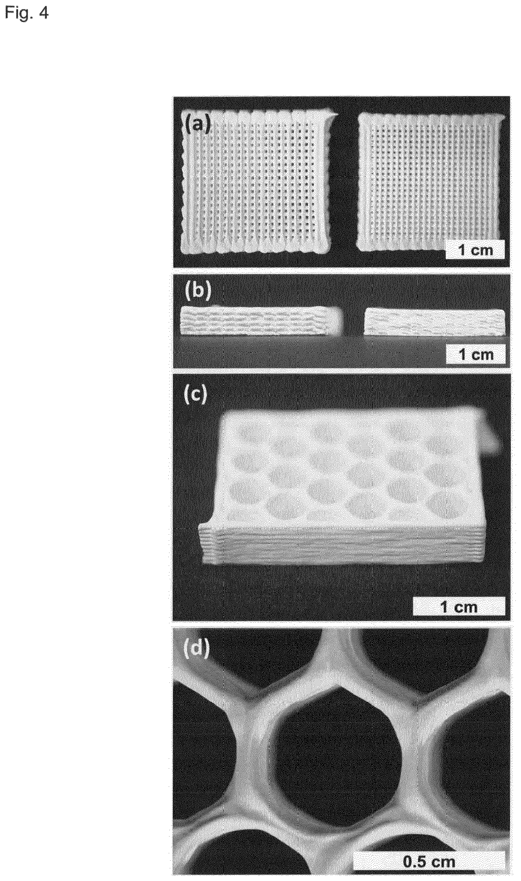

Fig. 4 shows images of porous sintered bodies obtained by the process according to the present invention. (a) Top view of a log-pile structure printed with a 610 µm nozzle (left) and a 250 µm nozzle (right). (b) Side view on the two log-pile structures. The porous sintered bodies do not exhibit any deformation and are free of cracks. The left sample consists of 10 printed layers, the right sample consists of 16 printed layers. (c) and (d) Honeycomb structure printed with a nozzle diameter of 200 µm. Sintering conditions: 1300 °C, 2 hours.

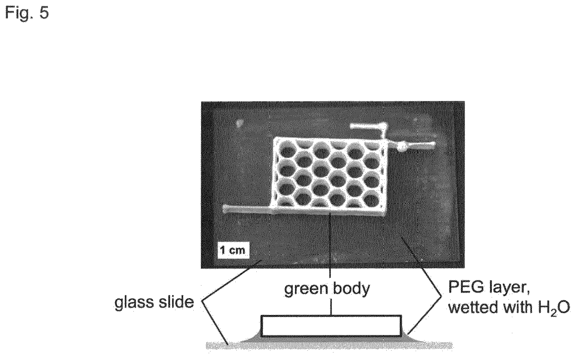

Fig. 5 shows a green body printed on a surface coated with a layer of polyethylene glycol, wherein the PEG layer is wetted with water before drying.

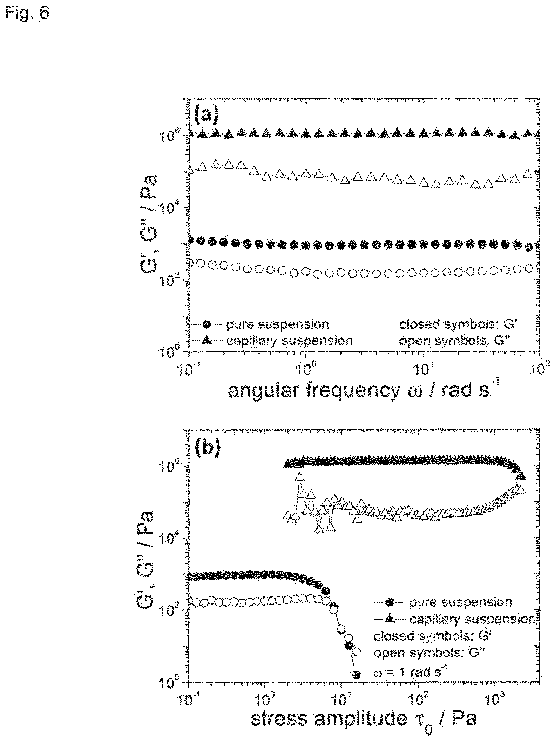

Fig. 6 shows rheological data from oscillatory shear experiments of a pure suspension and a capillary suspension. (a) Storage modulus G' and loss modulus G" are plotted as functions of angular frequency ω. The shear stress amplitude τ₀ was 0.5 Pa for the pure suspension and 10 Pa for the capillary suspension. (b) Storage modulus G' and loss modulus G" are plotted vs. shear stress amplitude τ₀.

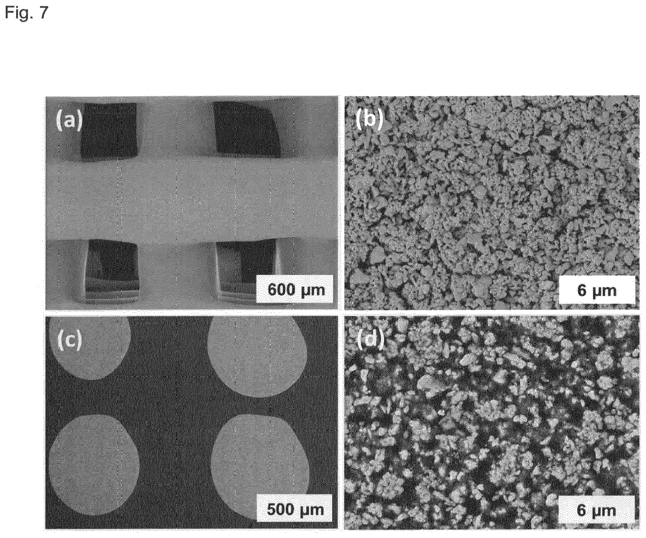

Fig. 7 shows SEM images of porous sintered bodies based on paste-like capillary suspensions. (a) Top view of printed filaments. (b) Magnified surface thereof, (c) Crosscut image of printed filaments. (d) Crosscut image with the typical pore structure of porous sintered bodies. Sintering conditions: 1300 °C, 2 hours.

### Example

The present invention is further illustrated by the following Example, but is not to be construed as being limited thereto.

### Preparation

First, suspensions were prepared by mixing alumina particles into the liquid primary phase with a speedmixer or a dissolver stirrer. Specifically, sample volumes of 50 mL were mixed in 100 mL cups for 1 min at 800 rpm and for 2 min at 2000 rpm. Subsequently, the liquid secondary phase was added and the suspension was mixed for 2 min at 2000 rpm. Principally, the mixing parameters could be varied in a wide range without changing the microstructure of the suspensions. The obtained paste-like capillary suspension was homogenized for 1 to 48 hours in a ball mill (long roll jar mill) to prevent the formation of agglomerates, using spherical grinding media with a ball diameter ranging from 10 to 30 mm (zirconia balls).

The composition of the paste-like capillary suspension was as follows:

| | |
|---|---|
| particulate solid phase: 31 vol% | α-Al₂O₃, type CT3000SG from Almatis GmbH average particle diameter d₅₀ ≈ 0.7 µm |
| liquid primary phase: | 48.5 vol% highly liquid paraffin |
| 63.9 vol% | 50.2 vol% odorless (aromate free) mineral spirit |
| | 1.3 vol% carnauba wax |
| liquid secondary phase: | 50 vol% water |
| 5.1 vol% | 50 vol% sucrose |

The further processing of the obtained paste-like capillary suspension is illustrated in Fig. 2. Green bodies were obtained via filamentary based direct ink writing. The capillary suspensions were extruded through tapered nozzles with an inner diameter ranging from 200 to 1000 µm, as shown in Fig. 3. A syringe pump was mounted on a custom made three-dimensional positioning station for extruding the inks with a constant volume flow. Syringes with a Luer-Lock tip and having a volume of 1 to 30 mL were installed on the syringe pump and loaded with the capillary suspension as the ink. For translation in xyz-direction, the positioning station was programmed, while the syringe pump enabled printing at a constant volumetric flow rate. Printing parameters were as follows: translation velocity ranging from 20 to 80 mm/s and volume flow ranging from 0.1 to 2 mL/min.

The capillary suspension was printed on rectangular glass slides which had been coated with a thin layer of PEG 1500. In order to obtain a homogeneous PEG layer, the glass slides as well as the polyethylene glycol were heated up to a temperature in the range of 60 to 95 °C. Afterwards, the PEG was spread with a razorblade to a smooth and homogeneous layer. Cellular structures, such as log-piles and honeycombs, were printed on these coated glass slides, as illustrated in Fig. 4.

After printing had been accomplished, the PEG layer was wetted with water around the green body and within the cellular structure thereof, as schematically depicted in Fig. 5. Then, the green body was dried in a laboratory oven at a temperature of 94 °C for 15 min. During the drying procedure, the mineral spirit in the liquid primary phase evaporated, and led to the crystallization of the dissolved palm wax that stabilized the green body. The PEG layerwetted with water was slippery and enabled the green body to uniformly shrink without being adhered thereto. After the drying step, the green body was gently moved onto a porous ceramic sintering plate, wherein the slippery PEG layer allowed for this displacement without damage or deformation of the dried green body.

Next, the green body was thermally debinded in a debinding furnace to burn out the binder components. The green body was heated from ambient temperature to 200 °C at a heating rate of 2 °C/min. Subsequently, the temperature was held constant for 1 hour at 200 °C. Afterwards, the temperature was increased to 700 °C with a heating rate of 1 °C/min, and was held for 1 hour at 700 °C. Finally, the furnace was cooled down to 400 °C at a cooling rate of 1.5 °C/min. After 15 min at a constant temperature of 400 °C, the furnace was further cooled down to ambient temperature without temperature regulation.

A custom made high temperature furnace was used for sintering. Specifically, the sintering temperature was in the range of 1200 to 1400 °C. The furnace was heated up to the sintering temperature at a heating rate of 3 °C/min. The final temperature was held constant for 2 hours. Subsequently, the furnace was cooled down to 50 °C at a cooling rate of 2 °C/min.

### Analytics

### (a) Paste-like capillary suspensions

Rheological measurements were performed with a stress-controlled rheometer (Haake Mars II, Thermo Fisher Scientific, Karlsruhe, Germany). A plate-plate geometry (upper plate: titanium, lower plate: stainless steel) with a diameter of 35 mm was used. Both plates were rough (sandblasted surface) to prevent wall slip. The measurements were conducted at a gap height of 1 mm at a temperature of 20 °C.

The capillary suspensions showed a strong paste-like behavior with a high yield stress and were shear thinning. Fig. 6 shows the typical rheological behavior for a pure suspension compared to a capillary suspension according to the present invention. The yield stress of the pure suspension was τ_{y} = 8.8 ± 2.5 Pa, whereas the yield stress of the capillary suspension was τ_{y} = 2287 ± 157 Pa. Accordingly, the yield stress of the capillary suspension exceeded the yield stress of the pure suspension by more than two orders of magnitude. The paste-like capillary suspension was well printable and exhibited a storage modulus G' of more than 106 Pa in the linear viscoelastic regime.

The paste-like capillary suspensions could be printed without deliquescence after extrusion. Advantageously, structures with spanning elements of more than 1 to 2 mm as well as with high aspect ratios, defined as the ratio of the height to the width, of more than 9 could be reproducibly obtained.

### (b) Porous sintered bodies

The porous sintered bodies obtained by three-dimensional printing on the basis of the paste-like capillary suspensions as the ink were fully open porous. Sintered extruded filaments showed open porosities ranging from 45 to 70% and average pore sizes d₅₀ ranging from 1 to 10 µm.

Three-dimensional shapes up to sizes of 60 x 40 x 10 mm could be printed, dried, thermally debinded and sintered without the occurrence of any cracks or bending, neither macroscopically nor microscopically. In the scanning electron microscopic studies, the printed filaments showed a smooth surface and did not exhibit any microcracks, as can be taken from Fig. 7. Crosscut images of sintered filaments showed a microstructure that is typical for sintered capillary suspensions: fully open porosity and small particle clusters consisting of 2 to 100 particles.

## Claims

1. A process for producing a porous sintered body based on a paste-like capillary suspension, comprising the steps of:
(a) providing a paste-like capillary suspension by mixing of 5 to 40 vol% of a particulate solid phase, 50 to 94.9 vol% of a liquid primary phase, and 0.1 to 10 vol% of a liquid secondary phase, in each case related to the total volume of the resulting suspension,
wherein the particulate solid phase comprises at least one solid component having an average particle diameter in the range of 0.05 to 50 µm, wherein the liquid primary phase comprises two non-polar liquid components which have a low and a high vapor pressure at ambient temperature, respectively, and a first binder component dissolved therein,
wherein the liquid secondary phase comprises a polar liquid component and a second binder component dissolved therein,
wherein the non-polar liquid component having a low vapor pressure of the liquid primary phase is selected from the group consisting of mineral oils, wherein the non-polar liquid component having a high vapor pressure of the liquid primary phase is selected from the group consisting of mineral spirits, wherein a low vapor pressure means a value of less than 10 hPa at ambient temperature, whereas a high vapor pressure means a value of equal to or more than 10 hPa at ambient temperature,
wherein in the liquid primary phase, the volume fraction of the non-polar liquid component having a low vapor pressure is in the range of 40 to 60 vol%, the volume fraction of the non-polar liquid component having a high vapor pressure is in the range of 39.5 to 59.5 vol%, and the volume fraction of the first binder component dissolved therein is in the range of 0.5 to 10 vol%, in each case related to the total volume of the resulting phase, and wherein in the liquid secondary phase, the volume fraction of the polar liquid component is in the range of 20 to 80 vol%, and the volume fraction of the second binder component dissolved therein is in the range of 20 to 80 vol%, in each case related to the total volume of the resulting phase;
(b) molding the paste-like capillary suspension into the desired geometrical shape, thereby forming a green body;
(c) drying the green body, thereby at least partially removing the liquid components;
(d) thermally debinding the green body, thereby removing the binder components; and
(e) sintering the green body, thereby obtaining the porous sintered body.

2. The process according to claim 1, wherein the at least one solid component of the particulate solid phase is selected from the group consisting of oxides, carbides, nitrides, phosphates and glasses.

3. The process according to claim 1 or 2, wherein the first binder component of the liquid primary phase is selected from the group consisting of carnauba wax, paraffin wax, polypropylene wax, montan wax and bees wax.

4. The process according to any one of claims 1 to 3, wherein the polar liquid component of the liquid secondary phase is selected from the group consisting of water, mono- and oligohydric alcohols, acetone and N-methyl-2-pyrrolidone.

5. The process according to any one of claims 1 to 4, wherein the second binder component of the liquid secondary phase is selected from the group consisting of mono-, oligo- and polysaccharides, polyethylene glycol, polyacrylate, polyvinyl alcohol, polyvinyl acetate and polyvinyl formamide.

6. The process according to any one of claims 1 to 5, wherein the particulate solid phase is first dispersed in the liquid primary phase, and then the liquid secondary phase is added to the obtained suspension of the particulate solid phase dispersed in the liquid primary phase.

7. The process according to any one of claims 1 to 6, wherein the molding is performed using three-dimensional printing and the paste-like capillary suspension is printed on a surface coated with a layer of polyethylene glycol, and wherein said layer of polyethylene glycol is wetted with water after the printing.

8. The process according to any one of claims 1 to 7, wherein the drying is performed at a drying temperature in the range of 50 to 120 °C for 5 to 60 minutes.

9. The process according to any one of claims 1 to 8, wherein the thermal debinding is performed at a debinding temperature in the range of 200 to 900 °C for at least 2 hours.

10. The process according to any one of claims 1 to 9, wherein the sintering is performed at a sintering temperature in the range of 900 to 2600 °C for at least 30 min.

11. Paste-like capillary suspension, obtainable by:
mixing of 5 to 40 vol% of a particulate solid phase, 50 to 94.9 vol% of a liquid primary phase, and 0.1 to 10 vol% of a liquid secondary phase, in each case related to the total volume of the resulting suspension,
wherein the particulate solid phase comprises at least one solid component having an average particle diameter in the range of 0.05 to 50 µm,
wherein the liquid primary phase comprises two non-polar liquid components which have a low and a high vapor pressure at ambient temperature, respectively,
and a first binder component dissolved therein,
wherein the liquid secondary phase comprises a polar liquid component and a second binder component dissolved therein,
wherein the non-polar liquid component having a low vapor pressure of the liquid primary phase is selected from the group consisting of mineral oils,
wherein the non-polar liquid component having a high vapor pressure of the liquid primary phase is selected from the group consisting of mineral spirits,
wherein a low vapor pressure means a value of less than 10 hPa at ambient temperature, whereas a high vapor pressure means a value of equal to or more than 10 hPa at ambient temperature,
wherein in the liquid primary phase, the volume fraction of the non-polar liquid component having a low vapor pressure is in the range of 40 to 60 vol%, the volume fraction of the non-polar liquid component having a high vapor pressure is in the range of 39.5 to 59.5 vol%, and the volume fraction of the first binder component dissolved therein is in the range of 0.5 to 10 vol%, in each case related to the total volume of the resulting phase, and
wherein in the liquid secondary phase, the volume fraction of the polar liquid component is in the range of 20 to 80 vol%, and the volume fraction of the second binder component dissolved therein is in the range of 20 to 80 vol%, in each case related to the total volume of the resulting phase.

## Patentansprüche

1. Verfahren zur Herstellung eines porösen Sinterkörpers auf Basis einer pastösen Kapillarsuspension, umfassend die Schritte:
(a) Bereitstellen einer pastösen Kapillarsuspension durch Mischen von jeweils 5 bis 40 Vol.-% einer partikulären Festphase, 50 bis 94,9 Vol.-% einer flüssigen Primärphase und 0,1 bis 10 Vol.-% einer flüssigen Sekundärphase jeweils bezogen auf das Gesamtvolumen der resultierenden Suspension, wobei die partikuläre Festphase mindestens eine Feststoffkomponente mit einem durchschnittlichen Partikeldurchmesser im Bereich von 0,05 bis 50 µm umfasst,
wobei die flüssige Primärphase zwei unpolare flüssige Komponenten, die bei Umgebungstemperatur einen niedrigen bzw. hohen Dampfdruck aufweisen, und eine darin gelöste erste Bindemittelkomponente umfasst,
wobei die flüssige Sekundärphase eine polare flüssige Komponente und eine darin gelöste zweite Bindemittelkomponente umfasst,
wobei die unpolare flüssige Komponente mit niedrigem Dampfdruck der flüssigen Primärphase aus der Gruppe, bestehend aus Mineralölen, ausgewählt ist,
wobei die unpolare flüssige Komponente mit hohem Dampfdruck der flüssigen Primärphase aus der Gruppe, bestehend aus Lösungsbenzin, ausgewählt ist,
wobei ein niedriger Dampfdruck einen Wert von weniger als 10 hPa bei Umgebungstemperatur bedeutet, während ein hoher Dampfdruck einen Wert von gleich oder mehr als 10 hPa bei Umgebungstemperatur bedeutet, wobei in der flüssigen Primärphase der Volumenanteil der unpolaren flüssigen Komponente mit niedrigem Dampfdruck im Bereich von 40 bis 60 Vol.-% liegt, der Volumenanteil der unpolaren flüssigen Komponente mit hohem Dampfdruck im Bereich von 39,5 bis 59,5 Vol.-% liegt und der Volumenanteil der darin gelösten ersten Binderkomponente im Bereich von 0,5 bis 10 Vol.-% liegt, jeweils bezogen auf das Gesamtvolumen der resultierenden Phase, und
wobei in der flüssigen Sekundärphase der Volumenanteil der polaren flüssigen Komponente im Bereich von 20 bis 80 Vol.-% liegt und der Volumenanteil der darin gelösten zweiten Bindemittelkomponente im Bereich von 20 bis 80 Vol.-% liegt, jeweils bezogen auf das Gesamtvolumen der resultierenden Phase;
(b) Formen der pastenartigen Kapillarsuspension in die gewünschte geometrische Form, wodurch ein Grünkörper gebildet wird;
(c) Trocknen des Grünkörpers, wodurch die flüssigen Komponenten zumindest teilweise entfernt werden;
(d) thermisches Entbindern des Grünkörpers, wodurch die Bindemittelkomponenten entfernt werden; und
(e) Sintern des Grünkörpers, wodurch der poröse Sinterkörper erhalten wird.

2. Verfahren nach Anspruch 1, **dadurch gekennzeichnet, dass** die mindestens eine Feststoffkomponente der partikulären Festphase aus der Gruppe, bestehend aus Oxiden, Carbiden, Nitriden, Phosphaten und Gläsern, ausgewählt ist.

3. Verfahren nach Anspruch 1 oder 2, wobei die erste Bindemittelkomponente der flüssigen Primärphase aus der Gruppe, bestehend aus Carnaubawachs, Paraffinwachs, Polypropylenwachs, Montanwachs und Bienenwachs, ausgewählt ist.

4. Verfahren nach einem der Ansprüche 1 bis 3, wobei die polare flüssige Komponente der flüssigen Sekundärphase aus der Gruppe, bestehend aus Wasser, einund mehrwertigen Alkoholen, Aceton und N-Methyl-2-pyrrolidon, ausgewählt ist.

5. Verfahren nach einem der Ansprüche 1 bis 4, wobei die zweite Bindemittelkomponente der flüssigen Sekundärphase aus der Gruppe, bestehend aus Mono-, Oligo- und Polysacchariden, Polyethylenglykol, Polyacrylat, Polyvinylalkohol, Polyvinylacetat und Polyvinylformamid, ausgewählt ist.

6. Verfahren nach einem der Ansprüche 1 bis 5, wobei die teilchenförmige Feststoffphase zuerst in der flüssigen Primärphase dispergiert wird und dann die flüssige Sekundärphase zu der erhaltenen Suspension der in der flüssigen Primärphase dispergierten teilchenförmigen Feststoffphase zugegeben wird.

7. Verfahren nach einem der Ansprüche 1 bis 6, wobei das Formen unter Verwendung von dreidimensionalem Drucken durchgeführt wird und die pastöse Kapillarsuspension auf eine mit einer Schicht aus Polyethylenglykol beschichtete Oberfläche gedruckt wird, und wobei die Schicht aus Polyethylenglykol nach dem Drucken mit Wasser benetzt wird.

8. Verfahren nach einem der Ansprüche 1 bis 7, wobei das Trocknen bei einer Trocknungstemperatur im Bereich von 50 bis 120°C für 5 bis 60 Minuten durchgeführt wird.

9. Verfahren nach einem der Ansprüche 1 bis 8, wobei das thermische Entbindern bei einer Entbinderungstemperatur im Bereich von 200 bis 900 °C für mindestens 2 Stunden durchgeführt wird.

10. Verfahren nach einem der Ansprüche 1 bis 9, wobei das Sintern bei einer Sintertemperatur im Bereich von 900 bis 2600 °C für mindestens 30 min durchgeführt wird.

11. Pastöse Kapillarsuspension, erhältlich durch:
Mischen von 5 bis 40 Vol.-% einer partikulären Feststoffphase, 50 bis 94,9 Vol.-% einer flüssigen Primärphase und 0,1 bis 10 Vol.-% einer flüssigen Sekundärphase, jeweils bezogen auf das Gesamtvolumen der resultierenden Suspension,
wobei die partikuläre Festphase mindestens eine Feststoffkomponente mit einem durchschnittlichen Partikeldurchmesser im Bereich von 0,05 bis 50 µm umfasst,
wobei die flüssige Primärphase zwei unpolare flüssige Komponenten, die bei Umgebungstemperatur einen niedrigen bzw. hohen Dampfdruck aufweisen, und
eine darin gelöste erste Bindemittelkomponente umfasst,
wobei die flüssige Sekundärphase eine polare flüssige Komponente und eine darin gelöste zweite Bindemittelkomponente umfasst,
wobei die unpolare flüssige Komponente mit niedrigem Dampfdruck der flüssigen Primärphase aus der Gruppe, bestehend aus Mineralölen, ausgewählt ist,
wobei die unpolare flüssige Komponente mit hohem Dampfdruck der flüssigen Primärphase aus der Gruppe, bestehend aus Lösungsbenzin, ausgewählt ist, wobei ein niedriger Dampfdruck einen Wert von weniger als 10 hPa bei Umgebungstemperatur bedeutet, während ein hoher Dampfdruck einen Wert von gleich oder mehr als 10 hPa bei Umgebungstemperatur bedeutet,
wobei in der flüssigen Primärphase der Volumenanteil der unpolaren flüssigen Komponente mit niedrigem Dampfdruck im Bereich von 40 bis 60 Vol.-% liegt,
der Volumenanteil der unpolaren flüssigen Komponente mit hohem Dampfdruck im Bereich von 39,5 bis 59,5 Vol.-% liegt und der Volumenanteil der darin gelösten ersten Binderkomponente im Bereich von 0,5 bis 10 Vol.-% liegt, jeweils bezogen auf das Gesamtvolumen der resultierenden Phase, und
wobei in der flüssigen Sekundärphase der Volumenanteil der polaren flüssigen Komponente im Bereich von 20 bis 80 Vol.-% liegt und der Volumenanteil der darin gelösten zweiten Bindemittelkomponente im Bereich von 20 bis 80 Vol.-% liegt, jeweils bezogen auf das Gesamtvolumen der resultierenden Phase.

## Revendications

1. Procédé de production d'un corps fritté poreux basé sur une suspension capillaire de type pâte, comprenant les étapes consistant à :
(a) fournir une suspension capillaire de type pâte en mélangeant de 5 à 40 % en vol. d'une phase solide particulaire, 50 à 94,9 % en vol. d'une phase primaire liquide et 0,1 à 10 % en vol. d'une phase secondaire liquide, dans chaque cas par rapport au volume total de la suspension résultante,
dans lequel la phase solide particulaire comprend au moins un composant solide ayant un diamètre particulaire moyen dans la plage de 0,05 à 50 µm,
dans lequel la phase primaire liquide comprend deux composants liquides non polaires qui ont une pression de vapeur basse et haute à température ambiante, respectivement, et un premier composant de liant dissout en son sein,
dans lequel la phase secondaire liquide comprend un composant liquide polaire et un second composant de liant dissout en son sein,
dans lequel le composant liquide non polaire ayant une vapeur de pression basse de la phase primaire liquide est sélectionné parmi le groupe constitué d'huiles minérales,
dans lequel le composant liquide non polaire ayant une pression de vapeur haute de la phase primaire liquide est sélectionné parmi le groupe constitué d'essences minérales,
dans lequel une pression de vapeur basse signifie une valeur inférieure à 10 hPa à température ambiante, tandis qu'une pression de vapeur haute signifie une valeur supérieure ou égale à 10 hPa à température ambiante,
dans lequel dans la phase primaire liquide, la fraction de volume du composant liquide non polaire ayant une pression de vapeur basse est dans la plage de 40 à 60 % en vol., la fraction de volume du composant liquide non polaire ayant une pression de vapeur haute est dans la plage de 39,5 à 59,5 % en vol., et la fraction de volume du premier composant de liant dissout en son sein est dans la plage de 0,5 à 10 % en vol., dans chaque cas par rapport au volume total de la phase résultante, et
dans lequel dans la phase secondaire liquide, la fraction de volume du composant liquide polaire est dans la plage de 20 à 80 % en vol., et la fraction de volume du second composant de liant dissout en son sein est dans la plage de 20 à 80 % en vol., dans chaque cas par rapport au volume total de la phase résultante ;
(b) mouler la suspension capillaire de type pâte à la forme géométrique souhaitée, formant de ce fait un corps vert ;
(c) sécher le corps vert, éliminant de ce fait au moins partiellement les composants liquides ;
(d) délier thermiquement le corps vert, éliminant de ce fait les composants de liant ; et
(e) fritter le corps vert, obtenant de ce fait le corps fritté poreux.

2. Procédé selon la revendication 1, dans lequel l'au moins un composant solide de la phase solide particulaire est sélectionné parmi le groupe constitué d'oxydes, de carbures, de nitrures, de phosphates et de verres.

3. Procédé selon la revendication 1 ou 2, dans lequel le premier composant de liant de la phase primaire liquide est sélectionné parmi le groupe constitué de la cire de carnauba, de la cire de paraffine, de la cire de polypropylène, de la cire de lignite et de la cire d'abeille.

4. Procédé selon l'une quelconque des revendications 1 à 3, dans lequel le composant liquide polaire de la phase secondaire liquide est sélectionné parmi le groupe constitué de l'eau, d'alcools mono- et oligohydriques, de l'acétone et de la N-méthyl-2-pyrrolidone.

5. Procédé selon l'une quelconque des revendications 1 à 4, dans lequel le second composant de liant de la phase secondaire liquide est sélectionné parmi le groupe constitué de mono-, oligo- et polysaccharides, du polyéthylèneglycol, du polyacrylate, de l'alcool polyvinylique, de l'acétate polyvinylique et du formamide polyvinylique.

6. Procédé selon l'une quelconque des revendications 1 à 5, dans lequel la phase solide particulaire est d'abord dispersée dans la phase primaire liquide, puis la phase secondaire liquide est ajoutée à la suspension obtenue de la phase solide particulaire dispersée dans la phase primaire liquide.

7. Procédé selon l'une quelconque des revendications 1 à 6, dans lequel le moulage est réalisé en utilisant une impression tridimensionnelle et la suspension capillaire de type pâte est imprimée sur une surface enrobée d'une couche de polyéthylèneglycol, et dans lequel ladite couche de polyéthylèneglycol est mouillée avec de l'eau après l'impression.

8. Procédé selon l'une quelconque des revendications 1 à 7, dans lequel le séchage est réalisé à une température de séchage dans la plage de 50 à 120 °C pendant 5 à 60 minutes.

9. Procédé selon l'une quelconque des revendications 1 à 8, dans lequel le déliantage thermique est réalisé à une température de déliantage dans la plage de 200 à 900 °C pendant au moins 2 heures.

10. Procédé selon l'une quelconque des revendications 1 à 9, dans lequel le frittage est réalisé à une température de frittage dans la plage de 900 à 2600 °C pendant au moins 30 min.

11. Suspension capillaire de type pâte, pouvant être obtenue en :
mélangeant de 5 à 40 % en vol. d'une phase solide particulaire, 50 à 94,9 % en vol. d'une phase primaire liquide et 0,1 à 10 % en vol. d'une phase secondaire liquide, dans chaque cas par rapport au volume total de la suspension résultante,
dans laquelle la phase solide particulaire comprend au moins un composant solide ayant un diamètre particulaire moyen dans la plage de 0,05 à 50 µm,
dans laquelle la phase primaire liquide comprend deux composants liquides non polaires qui ont une pression de vapeur basse et haute à température ambiante, respectivement, et un premier composant de liant dissout en son sein,
dans laquelle la phase secondaire liquide comprend un composant liquide polaire et un second composant de liant dissout en son sein,
dans laquelle le composant liquide non polaire ayant une vapeur de pression basse de la phase primaire liquide est sélectionné parmi le groupe constitué d'huiles minérales,
dans laquelle le composant liquide non polaire ayant une pression de vapeur haute de la phase primaire liquide est sélectionné parmi le groupe constitué d'essences minérales,
dans laquelle une pression de vapeur basse signifie une valeur inférieure à 10 hPa à température ambiante, tandis qu'une pression de vapeur haute signifie une valeur supérieure ou égale à 10 hPa à température ambiante,
dans laquelle dans la phase primaire liquide, la fraction de volume du composant liquide non polaire ayant une pression de vapeur basse est dans la plage de 40 à 60 % en vol., la fraction de volume du composant liquide non polaire ayant une pression de vapeur haute est dans la plage de 39,5 à 59,5 % en vol., et la fraction de volume du premier composant de liant dissout en son sein est dans la plage de 0,5 à 10 % en vol., dans chaque cas par rapport au volume total de la phase résultante, et
dans laquelle dans la phase secondaire liquide, la fraction de volume du composant liquide polaire est dans la plage de 20 à 80 % en vol., et la fraction de volume du second composant de liant dissout en son sein est dans la plage de 20 à 80 % en vol., dans chaque cas par rapport au volume total de la phase résultante.
